# EUROPÄISCHE PATENTANMELDUNG

(11) **EP 0 846 746 A1**
(43) Veröffentlichungstag der Anmeldung: **10.06.1998**
(21) Anmeldenummer: 97203684.2
(22) Anmeldetag: 25.11.1997
(51) Int. Cl.: C09K 11/02, C09K 11/08, C09K 11/56, C09K 11/84

(54) **Leuchtstoffzubereitung mit Hydroxycarbonsäure-Beschichtung**

(30) Priorität: 06.12.1996 DE 19650602
(71) Anmelder: Philips Patentverwaltung GmbH, 22335 Hamburg (DE); Philips Electronics N.V., 5621 BA Eindhoven (NL)
(72) Erfinder: Bredol, Michael, Dr., Röntgenstrasse 24, 22335 Hamburg (DE); Merikhi, Jacqueline, Röntgenstrasse 24, 22335 Hamburg (DE)
(74) Vertreter: Schmalz, Günther, Dipl.-Ing.

(57) **Zusammenfassung**

Eine Leuchtstoffzubereitung aus einem sulfidhaltigem Leuchtstoff mit einer Beschichtung, die eine Hydroxycarbonsäure enthält, ist im desagglomerierten Zustand trocken lagerfähig und läßt sich leicht resuspendieren.

## Beschreibung

Die Erfindung betrifft eine Leuchtstoffzubereitung aus einem sulfidhaltigen Leuchtstoff und einer Beschichtung, insbesondere eine Leuchtstoffzubereitung aus einem Oxysulfid-Leuchtstoff.

Oxysulfide von Yttrium, Lanthan, Gadolinium u.ä. werden als Basismaterial für lumineszierende Materialien, insbesondere Kathodenstrahlleuchtstoffe, eingesetzt. Besonders europiumaktiviertes Yttriumoxysulfid wird in großem Maßstab für die Herstellung von Farbbildschirmen verwendet- Bei den gängigen Verfahren zur Herstellung von Farbbildschirmen wird der Leuchtstoff entweder als lichtempfindliche, wäßrige Pulversuspension ( Flow-Coating-Verfahren) oder als fließfähiges bzw. aufstäubbares festes Pulver (Dusting-Verfahren) verarbeitet. Dabei ist es von großer Wichtigkeit, daß in dem Leuchtstoffpulver nur einzelne, desagglomerierte Leuchtstoffpartikel und keine Agglomerate vorliegen, da sonst die Bildschirmqualität leidet. Es ist daher für die Verarbeitbarkeit eines Leuchtstoffes entscheidend, daß er vollständig desagglomeriert werden kann. Üblicherweise erfolgt die Desagglomeration derart, daß der rohe, noch agglomerierte Leuchtstoff in ammoniakalischer Lösung einer Naßmahlung unterzogen wird. Dabei entsteht eine ammoniakalische Suspension des Leuchtstoffes, die unter Rühren für viele Stunden gegen eine Reagglomeration stabil ist. In diesem desagglomerierten Zustand werden gewöhnlich auch die Oberflächenveredlungen an dem Leuchtstoffpulver, z.B. Latizierung, Pigmentierung etc. durchgeführt. Wird für das weitere Bildschirmherstellungsverfahren eine saure Leuchtstoffsuspension benötigt, kann diese hergestellt werden, indem die ammoniakalische Leuchtstoffsuspension vorsichtig unter ständigem Rühren angesäuert wird. Die saure Leuchtstoffsuspension ist jedoch wesentlich instabiler gegenüber einer Reagglomeration als die ammoniakalische Suspension und hält sich nur über kurze Zeit.

Das durch Naßmahlung in ammoniakalischen Medium desagglomerierte Leuchtstoffpulver kann aber nicht als solches isoliert und gelagert werden. Ist die Pulversuspension einmal sedimentiert, ist für die Desagglomeration eine erneute Naßmahlung notwendig. Für die Herstellung von lagerfähigem, desagglomeriertem Leuchtstoffpulver, das ohne erneute Naßmahlung resuspendiert werden kann, ist deswegen eine geeignete Oberflächenconditionierung notwendig. Bei bekannten Verfahren werden dazu die Leuchtstoffpartikel mit feinen anorganischen Partikeln, beispielsweise Siliziumdioxid, Aluminiumoxid, Titandioxid, Eisenoxid u.ä., und/oder organischen Polymeren, beispielsweise Acrylaten, bedeckt, die die Reagglomeration verhindern. Die anorganischen Substanzen erniedrigen jedoch die Lumineszenzausbeute des Leuchtstoffes. Die organischen Beschichtungssubstanzen werden wahrend des Herstellungsverfahrens für den Bildschirm häufig nicht vollständig pyrolisiert, so daß die fertige Leuchtstoffschicht vergraut und die Lichtausbeute des Leuchtschirmes herabgesetzt ist.

Es ist daher die Aufgabe der vorliegenden Erfindung, eine Leuchtstoffzubereitung zur Verfügung zustellen, die im desagglomerierten Zustand trocken lagerfähig ist und eine hohe Lumineszenzausbeute zeigt.

Erfindungsgemäß wird die Aufgabe gelöst durch eine Leuchtstoffzubereitung aus einem sulfidhaltigem Leuchtstoff mit einer Beschichtung, die eine Hydroxycarbonsäure enthält. Die Beschichtung, die eine Hydroxycarbonsäure enthält, haftet fest, geht bei der Separation des Leuchtstoffes nicht verloren und verliert nicht ihre Wirksamkeit. Es wird so eine Resuspendierung des Leuchtstoffes ohne erneute Naßmahlung ermöglicht. Die Beschichtung ist auch in sehr dünner Schichtdicke wirksam und vermeidet dadurch unnötige Lichrverluste. Sie wild während des Herstellungsverfahrens für den Bildschirm vollständig pyrolisiert, so daß die Leuchtstoffbeschichtung auf dem Bildschirm durch diese Beschichtung nicht vergraut. Sie gibt keine umweltschädlichen Stoffe ab und kann beim Recyclen des Leuchtstoffes mit einfachen Mitteln erneuert werden.

Bekannt ist aus der DE-A-39 31 691 ein Verfahren zur Erhöhung der Lichtausbeute von mit Terbium aktivierten SE-Leuchtstoffen auf Oxysulfidbasis durch eine wäßrige Ätzbehandlung der Leuchtstoffkörner mit einem Säuregemisch aus organischer und anorganischer Säure, wobei als organische Säure Citronensäure verwendet werden kann.

Im Rahmen der vorliegenden Erfindung ist es bevorzugt, daß die Hydroxycarbonsäure eine α-Hydroxycarbonsäure ist. Diese sind in saurer und alkalischer Lösung beständig gegenüber Wasserabspaltung und lassen sich besonders leicht pyrolisieren.

Es ist weiterhin bevorzugt, daß die Hydroxycarbonsäure ausgewählt ist aus der Gruppe, die Weinsäure und Zitronensäure enthält. Diese α-Hydroxycarbonsäuren zeigen ein besonders gute Oberflächenaffinität zum Leuchtstoffpulver.

Im Rahmen der vorliegenden Erfindung ist es besonders bevorzugt, daß der Leuchtstoff ein Oxysulfid-Leuchtstoff ist.

Nachfolgend wird die Erfindung anhand von Beispielen weiter erläutert.

Als Ausgangsmaterial für die erfindungsgemäße Leuchtstoffzubereitung kann ein sulfidhaltiger Leuchtstoff wie ZnS:Cu,Al, ZnS:Cu,Au,Al, ZnS:Ag,Al oder ZnS:Ag,Cl verwendet werden. Bevorzugt ist die Verwendung von Oxysulfid-Leuchtstoffen, insbesondere von Oxysulfiden des Yttriums, Lanthans und Gadoliniums.

Die Leuchtstoffbeschichtung enthält eine Hydroxycarbonsäure, beispielsweise Glykolsäure HOCH₂COOH, Milchsäure CH₃CHOHCOOH, Hydroxybuttersäure CH₃CH₂CHOHCOOH, Mandelsäure C₆H₅CHOHCOOH, Glycerinsäure HOCH₂CHOHCOOH, Äpfelsäure HOOCCH₂CHOHCOOH, Weinsäure HOOCCHOHCHOHCOOH, Citronensäure HOOCCH₂C(OH)(COOH)CH₂COOH u.a. Besonders geeignet sind Citronensäure und Weinsäure. Die Leuchtstoffbeschichtung kann weiterhin organische und anorganische Pigmente zur Farbfilterung oder zur Desagglomeration enthalten.

Die Beschichtung bildet eine Schutzschicht von einer oder einigen wenigen Moleküllagen, die die Desagglomeration bei der Herstellung der Leuchtstoffzubereitung beschleunigt und die Reagglomeration verhindert. Je nach Präparationsart liegt die Hydroxycarbonsäure als freie Säure oder als an die Pulveroberfläche gebundenes Anion vor.

Zur Herstellung der erfindungsgemäßen Leuchtstoffzubereitung geht man von dem gewaschenen und vom Schmelzsalz befreiten Leuchtstoffpulver aus. Es ist aber auch möglich, von einem bereits mit Pigmentpartikeln beschichteten Leuchtstoffpulver auszugehen. Das Leuchtstoffpulver wird in Wasser aufgeschlämmt. Die Beschichtungsreaktion kann in leicht saurem oder alkalischem Medium durchgeführt werden. Der pH-Wert darf aber nicht unter pH 4 fallen, gegebenenfalls muß die wäßrige Aufschlämmung mit Base abgestumpft werden.

Der wäßrigen Aufschlämmung wird dann die Hydroxycarbonsäure in einer Menge von 0.001 bis 10 Gew.-%, vorzugsweise 0,1 bis 3 Gew.-%, bezogen auf den Leuchtstoff, zugesetzt. In alkalischer Aufschlämmung kann eine niedrigere Konzentration ausreichend sein, während in saurer Aufschlämmung eine Mindestmenge von 0,1 Gew.-% erforderlich ist.

In dieser Aufschlämmung wird der Leuchtstoff solange gemahlen, bis er vollständig desagglomeriert ist. Dies kann durch Kontrollmessungen der Partikelgröße während der Naßmahlung kontrolliert werden. Danach wird der beschichtete Leuchtstoff gegebenenfalls von den Mahlkörpern abgesiebt und filtriert. Schließlich wird er noch getrocknet.

Die Beschichtung aus Hydroxycarbonsäure haftet fest auf der Leuchtstoffoberfläche und geht bei der Abscheidung des Leuchtstoffes aus der wäßrigen Aufschlämmung nicht verloren. Die Beschichtung erlaubt eine trockene Lagerung des desagglomerierten Leuchtstoffes und eine Resuspendierung ohne erneute Naßmahlung. Falls die Beschichtung bei längerer Suspendierung des Leuchtstoffes abgelöst oder abgerieben wird, kann sie ohne weiteres erneuert werden. Die dünne Schutzschicht aus Hydroxycarbonsäure wird beim Ausheizen des fertig montierten Bildschirms resp. Bildröhre vollständig pyrolisiert.

### Ausführungsbeispiel 1

100 g gewaschenes Y₂O₂S:Eu-Pulver werden mit etwa den gleichen Volumina Mahlkörper und Wasser gemischt. Im Wasser ist 1 g Weinsäure gelöst. Der pH-Wert der Suspension wird mit Ammoniaklösung auf pH 9 eingestellt. Die Viskosität der Suspension wird mit Wasser und Mahlkörpern so eingestellt, daß sie gleichmäßig und vollständig gemahlen werden kann. Die Partikelgröße des Leuchtstoffes wird in regelmäßigen Abständen kontrolliert. Wenn eine Partikelgröße von 6,5 µm erreicht ist, werden die Mahlkörper abgesiebt. Das desagglomerierte, beschichtete Leuchtstoffpulver wird durch Filtration oder Sedimentation isoliert. Es wird anschließend bei 120°C getrocknet und ist dann gebrauchsfertig.

Die so hergestellte Leuchtstoffzubereitung wird zur Resuspendierung mit Wasser verrührt und einige Minuten mit Ultraschall behandelt. Die gemessene Partikelgröße der resuspendierten Leuchtstoffzubereitung entspricht der des Ausgangspulvers von 6,5 µm. Die Suspension ist wieder gebrauchsfähig.

### Ausführungsbeispiel 2

100 g gewaschenes Y₂O₂S:Eu-Pulver werden mit mit etwa den gleichen Volumina Mahlkörper und Wasser gemischt. Im Wasser ist 1 g Zitronensäure gelöst. Der pH-Wert der Suspension wird mit Ammoniaklösung auf pH 9 eingestellt. Die Viskosität der Suspension wird mit Wasser und Mahlkörpern so eingestellt, daß sie gleichmäßig und vollständig gemahlen werden kann. Die Partikelgröße des Leuchtstoffes wird in regelmäßigen Abständen kontrolliert. Wenn eine Partikelgröße von 6,5 µm erreicht ist, werden die Mahlkörper abgesiebt. Das desagglomerierte, beschichtete Leuchtstoffpulver wird durch Filtration oder Sedimentation isoliert. Es wird anschließend bei 120°C getrocknet und ist dann gebrauchsfertig. Die so hergestellte Leuchtstoffzubereitung wird zur Resuspendierung mit Wasser verrührt und einige Minuten mit Ultraschall behandelt. Die gemessene Partikelgröße der resuspendierten Leuchtstoffzubereitung entspricht der des Ausgangspulvers von 6,5 µm. Die Suspension ist wieder gebrauchsfähig.

### Ausführungsbeispiel 3

100 g gewaschenes Y₂O₂S:Eu-Pulver werden mit mit etwa den gleichen Volumina Mahlkörper und Wasser gemischt. Im Wasser ist 1g Zitronensäure gelöst. Der pH-Wert der Suspension wird mit Ammoniaklösung auf pH 4 eingestellt. Die Viskosität der Suspension wird mit Wasser und Mahlkörpern so eingestellt, daß sie gleichmäßig und vollständig gemahlen werden kann. Die Partikelgröße des Leuchtstoffes wird in regelmäßigen Abständen kontrolliert. Wenn eine Partikelgröße von 6,5 µm erreicht ist, werden die Mahlkörper abgesiebt. Das desagglomerierte, beschichtete Leuchtstoffpulver wird durch Filtration oder Sedimentation isoliert. Es wird anschließend bei 120°C getrocknet und ist dann gebrauchsfertig.

Die so hergestellte Leuchtstoffzubereitung wird zur Resuspendierung mit Wasser verrührt und einige Minuten mit Ultraschall behandelt. Die gemessene Partikelgröße der resuspendierten Leuchtstoffzubereitung entspricht der des Ausgangspulvers von 6,5 µm. Die Suspension ist wieder gebrauchsfähig.

## Patentansprüche

1. Leuchtstoffzubereitung aus einem sulfidhaltigem Leuchtstoff mit einer Beschichtung, die eine Hydroxycarbonsäure enthält.

2. Leuchtstoffzubereitung gemäß Anspruch 1,
dadurch gekennzeichnet,
daß die Hydroxycarbonsäure eine α-Hdroxycarbonsäure ist.

3. Leuchtstoffzubereitung gemäß Anspruch 1,
dadurch gekennzeichnet,
daß die Hydroxycarbonsäure ausgewählt ist aus der Gruppe, die Weinsäure und Zitronensäure enthält.

4. Leuchtstoffzubereitung gemäß Anspruch 1,
dadurch gekennzeichnet,
daß der Leuchtstoff ein Oxysulfid-Leuchtstoff ist.
